# FASCICULE DE BREVET EUROPEEN

(11) **EP 3 122 688 B1**
(45) Date de publication et mention de la délivrance du brevet: **06.06.2018**
(21) Numéro de dépôt: 15713457.8
(22) Date de dépôt: 27.03.2015
(51) Int. Cl.: C01F 17/00, B01J 23/42, H01M 4/92

(54) **NANOPARTICULES À BASE DE PLATINE ET D'UN OXYDE DE TERRE RARE ET LEURS PROCÉDÉS DE PRÉPARATION**
NANOPARTIKEL AUF BASIS VON PLATIN UND EINEM SELTENERDOXID SOWIE VERFAHREN ZUR HERSTELLUNG DAVON
NANOPARTICLES BASED ON PLATINUM AND A RARE EARTH OXIDE, AND THE METHODS FOR THE PRODUCTION THEREOF

(30) Priorité: 27.03.2014 FR 1452679
(43) Date de publication de la demande: 01.02.2017
(73) Titulaire: Centre National de la Recherche Scientifique (C.N.R.S.), 75016 Paris (FR); Université De Poitiers, 86034 Poitiers Cedex (FR)
(72) Inventeur: LUO, Yun, Guangzhou, Guangdong 510006 (CN); HARIBOUX, Aurélien, F-86240 Nouaille-Maupertius (FR); ALONSO-VANTE, Nicolas, F-86180 Buxerolles (FR)
(74) Mandataire: Novagraaf Technologies
(86) Numéro de dépôt international: PCT/EP2015/056746
(87) Numéro de publication internationale: WO 2015/144894

(56) Documents cités:
- US-A1- 2013 165 318
- TANG Z ET AL: "High performance rare earth oxides LnOx (Ln=Sc, Y, La, Ce, Pr and Nd) modified Pt/C electrocatalysts for methanol electrooxidation", JOURNAL OF POWER SOURCES, ELSEVIER SA, CH, vol. 162, no. 2, 22 novembre 2006 (2006-11-22), pages 1067-1072, XP027938562, ISSN: 0378-7753 [extrait le 2006-11-22]
- JEON M K ET AL: "Carbon supported Pt-Y electrocatalysts for the oxygen reduction reaction", JOURNAL OF POWER SOURCES, ELSEVIER SA, CH, vol. 196, no. 3, 1 février 2011 (2011-02-01), pages 1127-1131, XP027450428, ISSN: 0378-7753, DOI: 10.1016/J.JPOWSOUR.2010.08.048 [extrait le 2010-08-26]
- P R Kim ET AL: "In situ-generated metal oxide catalyst during CO oxidation reaction transformed from redox-active metal-organic framework-supported palladium nanoparticles", Nanoscale Research Letters, 17 août 2012 (2012-08-17), page 461, XP055192877, DOI: 10.1186/1556-276X-7-461 Extrait de l'Internet: URL:http://rd.springer.com/article/10.1186 /1556-276X-7-461#page-1 [extrait le 2015-06-01]

## Description

La présente invention concerne la synthèse de nanoparticules composées de platine et d'un oxyde de terre rare, notamment utiles pour la catalyse de la réaction de réduction du dioxygène (RRO) en milieu acide

L'invention concerne également l'élaboration d'une cathode comprenant lesdites nanoparticules et son utilisation notamment dans une pile à combustible à hydrogène, également appelée PEMFC (« proton exchange membrane fuel cell »).

Nishanth et al. (Electrochem. Comm., 2011, 13, 1465-1468), ont démontré que la synthèse de nanoparticules catalytiques supportées sur carbone de formule Pt-Y(OH)₃/C permettent d'améliorer la cinétique de la RRO dans des piles à combustible au méthanol direct. Jeon et al. (J. Power Sources, 2011, 196, 1127-1131), ont synthétisé des nanoparticules catalytiques supportées sur carbone de formule Pt₃-Y/C et Pt-Y/C qui ont été mises en oeuvre dans la RRO dans des piles à combustible à hydrogène en présence d'une solution acide.

Les nanoparticules obtenues selon la méthode de réduction au borohydrure de sodium n'ont pas été mesurées.

L'invention a pour but d'améliorer l'activité du platine vis-à-vis de la RRO, notamment en milieu acide.

L'invention a notamment pour but de fournir des nanoparticules qui puissent présenter des propriétés catalytiques satisfaisantes mais qui puissent être préparées selon une voie de synthèse industrialisable.

L'invention a encore pour objectif de fournir des nanoparticules de catalyseur relativement stables ayant de bonnes propriétés catalytiques dans une pile à combustible à hydrogène.

L'invention a également pour objectif de fournir des procédés économiquement rentables permettant de synthétiser à l'échelle industrielle de telles nanoparticules.

L'invention a encore pour but de fournir des matériaux catalytiques moins onéreux que ceux à base de platine actuellement commercialisés.

Pour tenter de résoudre ces problèmes techniques, la demanderesse a procédé à des essais de synthèse de nanoparticules supportées sur carbone, les dites nanoparticules étant préparées à base de platine et une terre rare, telle que l'yttrium ou le gadolinium, selon la méthode de préparation par microémulsion appelée « water in oil ».

La demanderesse a découvert de manière surprenante de nouvelles nanoparticules améliorant l'activité du platine vis-à-vis de la RRO, notamment en milieu acide.

Les nanoparticules de l'invention présentent des propriétés catalytiques satisfaisantes et peuvent être préparées selon des voies de synthèse industrialisable.

Les nanoparticules de l'invention sont relativement stables avec de bonnes propriétés catalytiques pour leur utilisation de manière satisfaisante par exemple dans une pile à combustible à hydrogène, et en particulier dans une PEMFC.

La présente invention concerne également des procédés économiquement rentables permettant d'envisager de synthétiser à l'échelle industrielle les nanoparticules de l'invention.

La demanderesse a également mis en évidence que les nanoparticules selon l'invention ont une activité catalytique stable dans une pile PEMFC même après un nombre important de cycles d'oxydation/réduction électrochimiques.

Un premier objet de l'invention concerne des nanoparticules à base de comprenant au moins du platine et au moins une terre rare, ladite terre rare étant présente sous forme oxydée.

De manière préférée, le composé de platine présente la formule (I) suivante :

Pt-MₓO_{y}

où x est le nombre d'atomes terre rare M présents et y est le nombre d'atomes d'oxygène présents.

Selon un mode de réalisation, x est égal à 1 ou 2 et y est égal à 2 ou 3 (MₓO_{y}).

De manière préférée, la terre rare est choisie parmi l'Yttrium, le Gadolinum, le Samarium, le Cérium, l'Europium, le Praséodyme, le Scandium, le Terbium, l'Ytterbium, le Thulium ou l'un quelconque de leurs mélanges. Une « terre rare » est également appelée dans le métier « élément de terre rare » ou « élément terre rare ». Ces appellations sont équivalentes.

Dans un mode de réalisation particulier, la terre rare est l'yttrium ou le gadolinium.

Selon une variante spécifique, MₓO_{y} est Y₂O₃.

Selon une variante spécifique, MₓO_{y} est Gd₂O₃.

De manière préférée, le composé à base de platine présente une structure cristalline, de type cubique à faces centrées.

Selon une variante le composé ne comprend pas d'alliage du platine avec la terre rare. En particulier, selon un mode de réalisation, le composé ne comprend pas d'alliage entre le platine et l'yttrium. Selon un mode de réalisation, le composé ne comprend pas d'alliage entre le platine et le gadolinium.

Selon une variante, l'oxyde de terre rare est présent en surface du platine. Plus particulièrement, selon une variante, Y₂O₃ est présent en surface du platine. Selon une autre variante, Gd₂O₃ est présent en surface du platine.

Selon une variante, par l'analyse de spectroscopie de photoélectron (XPS), la surface des nanoparticules présente un rapport molaire entre Pt et Y entre 1 et 5. Selon une variante, le rapport molaire entre Pt et Y est supérieur à 2, et de préférence supérieure à 3.

Selon une variante, par analyse XPS, la surface des nanoparticules présente un rapport molaire entre Pt et Gd entre 0,5 et 2. Selon une variante, le rapport molaire entre Pt et Gd est inférieur à 1.

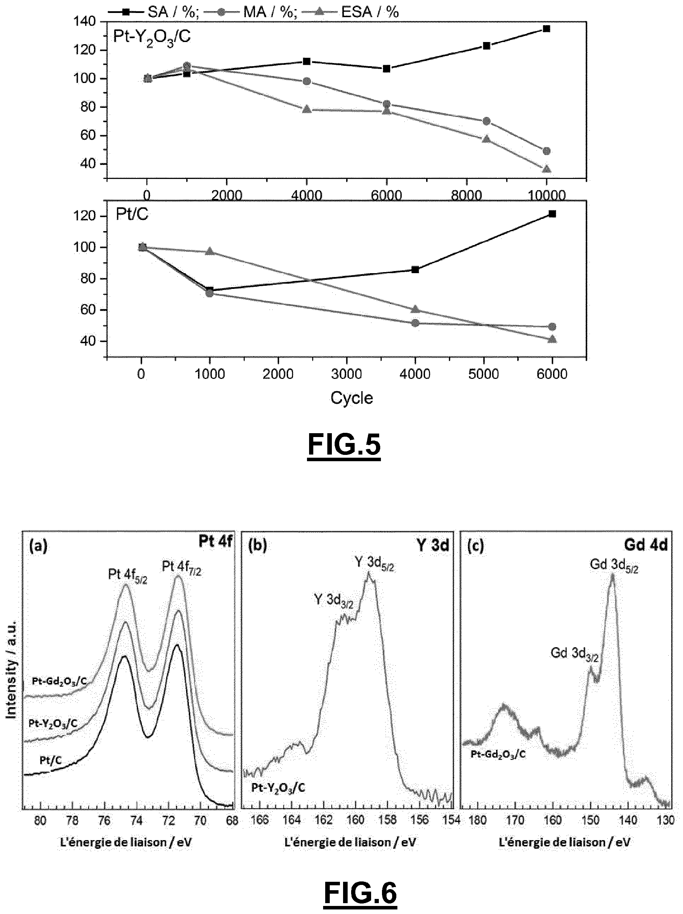

L'analyse XPS permet de déterminer l'environnement du platine dans les nanoparticules selon l'invention mais également l'environnement de la terre rare. D'après ces analyses XPS, la structure du platine dans les nanoparticules selon l'invention n'a pas été modifiée car il n'y a pas de déplacement des pics des énergies de liaison correspondant aux raies 4f_{7/2} et 4f_{5/2} du platine. D'après ces analyses XPS (par exemple figure 6), il n'y a pas présence des pics correspondant au noyau métallique de l'yttrium et du gadolinium et les pics correspondant à la couche atomique 3d_{5/2} sont fortement déplacés par rapport aux pics attendus pour l'yttrium et le gadolinium métallique et sont respectivement positionnés à 158,4 eV et 143,7 eV. L'absence des pics correspondants aux atomes métalliques d'yttrium et de gadolinium indique que ces atomes sont oxydés.

De manière préférée, les nanoparticules sont supportées.

Dans un mode de réalisation particulier, le support peut comprendre du carbone, notamment du carbone activé. Par exemple, le carbone peut être sous la forme de carbone amorphe, de nanotubes de carbone, de noir de carbone ou de graphène.

Un exemple de support à base de noir de carbone est le Vulcan®XC-72 commercialisé par la société Cabot.

Dans un autre mode de réalisation particulier, le support peut comprendre un composite oxyde-carbone. De préférence, le composite oxyde-carbone est choisi parmi TiO₂-carbone, WO₃-carbone ou SnO₂-carbone ou Ti₁₋ₓMₓO₂. (M= Ru, Nb, Sn, et x de 0 à 1).

De manière préférée, la masse du support représente entre 5 et 60%, de la masse totale du catalyseur. Selon une variante, la masse du support représente 15 à 25%, par exemple 20%, de la masse totale des nanoparticules.

Selon une variante, l'activité spécifique des nanoparticules est supérieure ou égale à 120, et par exemple supérieure ou égale à 130 µA.cm⁻²_{Pt}. Dans un mode de réalisation particulier, l'activité spécifique des nanoparticules est supérieure ou égale à 140 µA.cm⁻²_{Pt}, par exemple supérieure ou égale à 200 µA.cm⁻²_{Pt}.

Selon un mode de réalisation particulier, l'activité spécifique des nanoparticules est comprise entre 130 et 300 µA.cm⁻²_{Pt}.

Dans ce mode de réalisation particulier, l'activité spécifique des nanoparticules est comprise entre 140 et 280 µA.cm⁻²_{Pt}.

Au sens de l'invention, par activité spécifique on entend le rapport entre l'intensité du courant à une valeur de potentiel de 0,9 V vs. ERH et la surface active du catalyseur de l'invention, mesurée après 20 cycles électrochimiques (voir l'exemple 5).

Dans un mode de réalisation, l'activité massique des nanoparticules est supérieure ou égale à 80, par exemple supérieure ou égale à 100 mA. mg⁻¹_{Pt}.

Dans un mode de réalisation particulier, l'activité massique des nanoparticules est supérieure ou égale à 110, par exemple supérieure ou égale à 100 mA. mg⁻¹_{Pt}.

Dans un autre mode de réalisation particulier, l'activité massique des nanoparticules est supérieure ou égale à 110, et par exemple supérieure ou égale à 120 mA. mg⁻¹_{Pt}.

Dans ce mode de réalisation particulier, l'activité massique des nanoparticules est comprise entre 100 et 200 mA. mg⁻¹_{Pt}.

Dans un mode de réalisation particulier, l'activité massique des nanoparticules est de préférence comprise entre 120 et 200 mA. mg⁻¹_{Pt}.

Au sens de l'invention, par activité massique on entend le rapport entre l'intensité du courant cinétique à 0,9 V vs. ERH et la masse de platine utilisée dans le catalyseur.

L'activité spécifique, et l'activité massique ont été déduites à un potentiel de 0,9 V vs. ERH. Les mesures ont été réalisées à l'aide de la technique de l'électrode tournante à disque (Rotating Disk Electrode ou RDE) comme décrit dans Bard et al, Electrochemical Methods : Fundamentals and Applications, John Wiley & Sons, NY, 2nd Ed., 2002).

Au sens de l'invention, l'activité spécifique et l'activité massique sont mesurées à un potentiel de 0,9 V vs. ERH sur une RDE ayant une vitesse de rotation de 900 tours par minute (rpm).

De manière préférée, la taille moyenne des nanoparticules est comprise entre 0,1 et 10 nm, par exemple entre 0,5 et 5 nm, plus spécifiquement entre 2 et 3 nm.

Dans un mode de réalisation particulier, au moins 90% en nombre des nanoparticules ont une taille comprise entre 1 et 4 nm.

Au sens de l'invention, la taille des nanoparticules est mesurée par microscopie électronique en transmission (TEM) au moyen d'un microscope JEOL® (JEM-2001) équipé d'un dispositif de spectroscopie de rayons X à dispersion d'énergie. L'échantillon de nanoparticules est dispersé dans l'éthanol puis une goutte de cette dispersion est appliquée sur une grille en cuivre recouverte d'un film de carbone. L'éthanol est ensuite évaporé. Cette manipulation a été effectuée plusieurs fois afin d'obtenir plusieurs images de ces nanoparticules. Le diamètre de Féret des nanoparticules d'après les images obtenues par TEM est mesuré au moyen du logiciel ImageJ. La distribution de taille des nanoparticules a été réalisée en évaluant la taille de 300 nanoparticules sur différentes images obtenues par TEM.

De manière préférée, le composé de formule Pt-MₓO_{y} présente un rapport stoechiométrique entre Pt et M (Pt/M) compris entre 1:2 et 10:1. Au sens de l'invention, la stoechiométrie est mesurée par ICP-OES (inductively coupled plasma- optical emission spectrometry ou spectrométrie par torche à plasma induit par émission optique). (Optima 2000 DV, Perkin-Elmer).

Un autre objet de l'invention concerne un procédé de préparation de nanoparticules, notamment telles que définies selon l'invention.

Dans une première variante, le procédé de préparation de nanoparticules selon l'invention comprend une étape de traitement thermique comprenant (i) une étape de mise en contact de précurseurs de nanoparticules de l'invention, comprenant du platine et au moins une terre rare, avec du monoxyde de carbone (CO), (ii) la carbonylation du produit obtenu par traitement thermique, (iii) de préférence l'addition d'un support, et (iv) un traitement thermique à une température suffisante pour former des oxydes de terre rare au moins en surface des nanoparticules formées.

En particulier, ledit procédé peut comprendre :
a. le mélange sous agitation et sous atmosphère inerte d'un sel de Pt, d'un sel de terre rare, d'un sel d'acétate et d'un solvant, par exemple, du méthanol,
b. Le chauffage du mélange préalablement obtenu sous une atmosphère contenant du monoxyde de carbone.
c. Le remplacement de l'atmosphère contenant du monoxyde de carbone par une atmosphère inerte, par exemple d'azote, et de préférence l'addition d'un support de nanoparticules,
d. L'évaporation du solvant afin d'obtenir une poudre de nanoparticules,
e. Le traitement thermique de la poudre de nanoparticules à une température comprise entre 80 et 600 °C sous une atmosphère d'un gaz inerte, comme par exemple l'azote, en présence de dihydrogène,
f. Le lavage de la poudre catalytique traitée afin d'obtenir des nanoparticules.

De manière préférée, la préparation selon l'étape a. est réalisée pendant une durée allant de 10 à 30 minutes, de préférence d'environ 15 minutes.

De manière préférée, le chauffage selon l'étape b. est réalisé pendant une durée allant de 12 à 36 heures, de préférence d'environ 24 heures.

De manière également préférée, le chauffage selon l'étape b. est réalisé à une température comprise entre 55 et 60°C, de préférence d'environ 55°C,

De manière préférée le mélange à l'étape b. est chauffé sous une atmosphère constituée de monoxyde de carbone.

De manière préférée, l'évaporation du solvant selon l'étape c. est réalisée à une température suffisante pour éliminer substantiellement le solvant, et par exemple comprise entre 60 et 80°C, de préférence d'environ 85°C afin d'obtenir la poudre de nanoparticules. Selon une variante, le solvant est une molécule organique, par exemple choisi parmi Diméthyle formamide, éthanol, acétone, méthanol, et de préférence est le méthanol.

De manière préférée, le traitement thermique selon l'étape d. est réalisé pendant une durée allant de 30 minutes à 2 heures, de préférence 2 heures.

De manière préférée, le procédé peut comprendre en outre avant l'étape d, l'introduction sous atmosphère inerte et à température ambiante d'un support dans le mélange obtenu à l'étape c.

Dans un mode de réalisation particulier, l'introduction d'un support dans le mélange obtenu à l'étape b. est réalisée sous agitation mécanique.

Dans un autre mode de réalisation particulier, le mélange obtenu à l'étape b. est mis en présence du support pendant une durée allant de 2 à 24 heures, de préférence d'environ 12 heures.

De manière préférée, le support peut être un support de carbone, de préférence un support de carbone activé. Par exemple, l'activation du support de carbone est réalisée à 400°C sous atmosphère inerte pendant 4 heures.

De manière préférée, le ratio stoechiométrique avant réaction entre le platine et le terre rare (Pt/M) à l'étape a. est compris entre 1:1 et 5:1, et par exemple est de 3:1.

Selon une variante les précurseurs de nanoparticules comprennent au moins un sel de platine et au moins un sel de terre rare. Selon une variante, les précurseurs de nanoparticules comprennent également au moins un sel d'acétate, par exemple d'acétate de sodium.

De manière préférée, le sel de platine est Na₂PtCl₆ (par exemple Na₂PtCl₆ , 6H₂O).

De manière préférée, les sels de terre rare choisis sont YCl₃, GdCl₃.

De manière préférée, le ratio stoechiométrique avant réaction entre Na₂PtCl₆, (1 mole) et l'acétate de sodium (6 moles) est de 1/6.

De manière préférée, le pourcentage de dihydrogène dans l'atmosphère de l'étape e. est supérieur à 1 %, et de préférence compris entre 1 et 20 %, par exemple compris entre 2 et 10 % exprimé en fraction molaire des éléments gazeux présents. Dans un mode de réalisation particulier, le pourcentage de dihydrogène (H₂) dans l'atmosphère est d'environ 5%. Selon une variante l'atmosphère comprend un gaz inerte, comme par exemple l'azote (N₂). Selon un mode de réalisation, l'atmosphère de l'étape e. est un gaz mixte H₂/N₂, par exemple à une proportion de 5/95 exprimé en pourcentage molaire.

De manière préférée, le procédé comprend à l'étape le chauffage à une température comprise entre environ 100 et 600°C, de préférence comprise entre 300°C et 500°C.

De manière préférée, le procédé peut comprendre en outre après l'étape e, le séchage des nanoparticules par exemple à une température comprise entre 50 et 70°C, de préférence d'environ 60°C.

Dans un mode de réalisation particulier, le séchage des nanoparticules est réalisé pendant une durée allant de 2 à 24h, de préférence d'environ 12 heures.

De manière préférée, les nanoparticules lavées sont filtrées à l'étape f.

Dans une seconde variante, le procédé de préparation de nanoparticules selon l'invention comprend (v) une étape de mise en contact d'au moins un précurseur de nanoparticules de l'invention, comprenant du platine, avec un sel d'acétate et du monoxyde de carbone (CO), (vi) la carbonylation du produit obtenu par traitement thermique, (vii) l'addition d'un précurseur de nanoparticules selon l'invention comprenant au moins un polymère de coordination (MOF) et au moins une terre rare et optionnellement d'un support, et (viii) un traitement thermique à une température suffisante pour former des oxydes de terre rare au moins en surface des nanoparticules formées. Un « polymère de coordination » est également appelée dans le métier « metal-organic framework » ou « MOF ». Ces appellations sont équivalentes.

Les nanoparticules selon l'invention obtenues selon cette variante du procédé peuvent également être nommées NAVLY (HT-900).

En particulier, ledit procédé peut comprendre :
g. le mélange sous agitation et sous atmosphère inerte d'un sel de Pt, d'acétate de sodium et d'un solvant, par exemple, du méthanol,
h. le chauffage du mélange préalablement obtenu sous une atmosphère contenant du monoxyde de carbone,
i. le remplacement de l'atmosphère contenant du monoxyde de carbone par une atmosphère inerte, par exemple d'azote,
j. l'addition d'un composé MOF comprenant au moins une terre rare et au moins un ligand choisi parmi 2-aminotéréphtalate, 1,3,5-benzènetricarboxylate, 5-aminoisophtalate, 4,4'-oxybis(benzoate), 1,2,4,5-benzènetétracarboxylate, ou 4,4'-biphényldicarboxylate, et de préférence l'addition d'un support de carbone, notamment des nanotubes de carbone,
k. l'évaporation du solvant afin d'obtenir une poudre de nanoparticules,
l. le traitement thermique de la poudre de nanoparticules à une température comprise entre 100 et 1000 °C sous une atmosphère d'un gaz inerte, comme par exemple l'azote,
m. le lavage de la poudre catalytique traitée afin d'obtenir des nanoparticules.

De manière préférée, le sel d'acétate et l'acétate de sodium.

De manière préférée, la préparation selon l'étape g. est réalisée pendant une durée allant de 10 à 30 minutes, de préférence d'environ 15 minutes.

De manière préférée, le chauffage selon l'étape h. est réalisé pendant une durée allant de 12 à 36 heures, de préférence d'environ 24 heures.

De manière également préférée, le chauffage selon l'étape h. est réalisé à une température de 50 à 60°C, de préférence d'environ 55°C.

De manière préférée, le mélange à l'étape h. est chauffé sous une atmosphère constituée de monoxyde de carbone.

De manière préférée, le ratio stoechiométrique avant réaction entre le platine et le terre rare (Pt/M) à l'étape j. est compris entre 3 et 6, de préférence est de 3.

De manière préférée, la quantité de composé MOF introduite à l'étape j. est comprise entre 10 et 20% en masse, de préférence 10% en masse par rapport à la masse de carbone introduite à l'étape j. avec le composé MOF.

De manière préférée, le mélange obtenu à l'étape j. est homogénéisé pendant une durée allant de 2 à 24h, de préférence d'environ 12h.

De manière préférée, l'introduction du composé MOF à l'étape j. est réalisée sous atmosphère inerte et à température ambiante dans le mélange obtenu à l'étape i.

De manière préférée, l'introduction du composé MOF dans le mélange obtenu à l'étape i. est réalisée sous agitation mécanique.

De manière également préférée, le mélange obtenu à l'étape i. est mis en présence du composé MOF pendant une durée allant de 2 à 24 heures, de préférence d'environ 12 heures.

Dans un mode de réalisation particulier, le procédé peut comprendre en outre à l'étape j., l'introduction sous atmosphère inerte et à température ambiante d'un support dans le mélange obtenu à l'étape i.

De manière préférée, le composé MOF et le support sont préalablement mixé ensemble avant leurs introductions à l'étape j.

De manière préférée, l'introduction du mélange comprenant le composé MOF et le support à l'étape j. est réalisée sous atmosphère inerte et à température ambiante dans le mélange obtenu à l'étape i.

De manière préférée, l'introduction du mélange comprenant le composé MOF et le support dans le mélange obtenu à l'étape i. est réalisée sous agitation mécanique.

De manière également préférée, le mélange obtenu à l'étape j. est mis en présence du mélange comprenant le composé MOF et le support pendant une durée allant de 2 à 24 heures, de préférence d'environ 12 heures.

De manière préférée, le support peut être des nanotubes de carbone, de préférence des nanotubes de carbone multi-couches pouvant être notamment oxydés.

De manière avantageuse, les nanotubes de carbone sont activés. Par exemple, l'activation des nanotubes de carbone est réalisée à 100°C sous atmosphère inerte pendant 12 heures.

De manière préférée, l'évaporation du solvant selon l'étape k. est réalisée à une température suffisante pour éliminer substantiellement le solvant, et par exemple comprise entre 60 et 90°C, de préférence d'environ 85°C afin d'obtenir la poudre de nanoparticules. Selon une variante, le solvant est une molécule organique, par exemple choisi parmi Diméthyle formamide, éthanol, acétone, méthanol, et de préférence est le méthanol.

De manière préférée, le traitement thermique selon l'étape k. est réalisé pendant une durée allant de 30 minutes à 2 heures, de préférence 2 heures.

De manière préférée, le ratio stoechiométrique avant réaction entre le platine et le sodium (Pt/Na) à l'étape g. est de 1/6.

De manière préférée, les précurseurs de nanoparticules à l'étape g. comprennent au moins un sel de platine et au moins un sel d'acétate, par exemple d'acétate de sodium.

De manière préférée, le sel de platine est Na₂PtCl₆ (par exemple Na₂PtCl₆ , 6H₂O).

De manière préférée, le ratio stoechiométrique avant réaction entre Na₂PtCl₆, (1 mole) et l'acétate de sodium (6 moles) est de 1/6.

De manière préférée, le traitement thermique à l'étape l. est réalisé à une température comprise entre environ 400 et 1000°C, de préférence comprise entre 600°C et 1000°C, plus préférentiellement est de 900°C.

De manière préférée, le lavage à l'étape m. est réalisé avec de l'eau ultra-pure (MILLI-Q), par exemple de l'eau 18 MΩ.cm.

De manière préférée, les nanoparticules lavées sont filtrées à l'étape m..

Dans un mode de réalisation particulier, la filtration des nanoparticules est réalisée au moyen d'un filtre microporeux, de préférence un filtre microporeux présentant des porosités d'une taille de 0,22 µm.

De manière préférée, le procédé peut comprendre en outre après l'étape m., le séchage des nanoparticules par exemple à une température de 50 à 70°C, de préférence d'environ 60°C.

Dans un mode de réalisation particulier, le séchage des nanoparticules est réalisé pendant une durée allant de 2 à 24h, de préférence d'environ 12 heures.

De manière préférée, les nanoparticules présentent un taux de charge de terre rare de 1 à 4, et par exemple de 2% en masse par rapport à la masse des nanoparticules.

Un autre objet de l'invention concerne des nanoparticules susceptibles d'être obtenues par au moins une des variantes du procédé selon l'invention.

L'ensemble des caractéristiques, modes de réalisation, variantes, et caractéristiques spécifiques et préférées décrites pour les nanoparticules de l'invention peuvent être combinées avec le procédé de l'invention, y compris dans ses différentes caractéristiques, modes de réalisation, variantes, et caractéristiques spécifiques et préférées, sauf lorsque cette combinaison est techniquement impossible.

Un autre objet de l'invention concerne une encre comprenant des nanoparticules selon l'invention.

De manière préférée, l'encre peut être sous la forme d'une suspension aqueuse de nanoparticules selon l'invention. Selon une variante, l'encre comprend plus de 2%, par exemple plus de 5%, en masse de nanoparticules par rapport à la masse totale de la solution. En général la solution est un mélange d'eau avec un ou plusieurs additifs.

De manière également préférée, l'encre peut comprendre en outre un agent liant permettant d'améliorer la conductivité ionique, de préférence le Nafion®.

Dans un mode de réalisation particulier, l'agent liant peut être sous la forme liquide.

Un exemple d'agent liant est un copolymère sulfoné de tétrafluoroéthylène à base, par exemple le Nafion® commercialisé par la société Du Pont de Nemours.

Un autre objet de l'invention concerne une cathode pour/de pile à combustible à hydrogène comprenant des nanoparticules selon l'invention.

Dans un mode particulier, les nanoparticules sont déposées sur la surface de la cathode au moyen d'une encre selon l'invention.

Un autre objet de l'invention concerne l'utilisation des nanoparticules selon l'invention en tant que catalyseur pour/de la RRO en milieu acide.

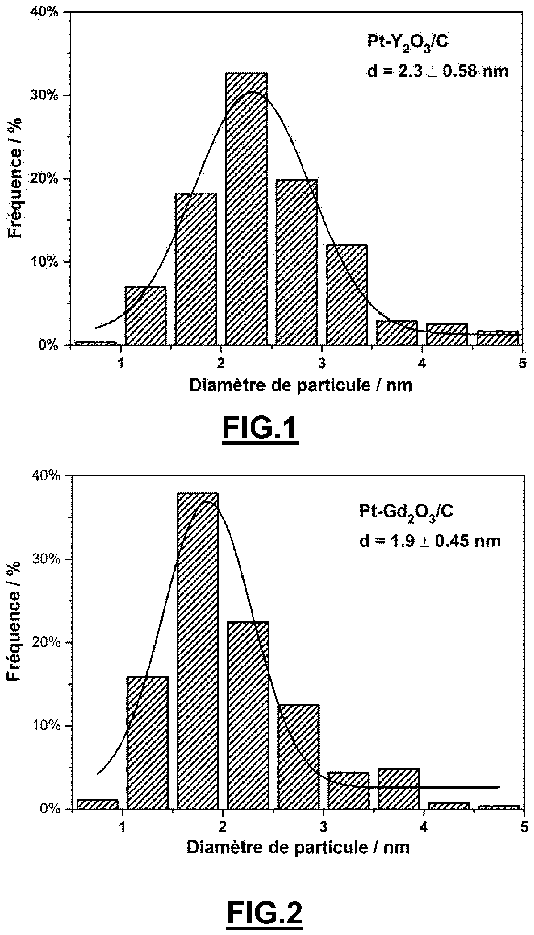

La figure 1 représente l'histogramme de la distribution de la taille des nanoparticules de catalyseur (Pt-Y₂O₃/C), à partir d'images obtenues par la TEM.
La figure 2 représente l'histogramme de la distribution de la taille des nanoparticules de catalyseur (Pt-Gd₂O₃/C), à partir d'images obtenues par la TEM.

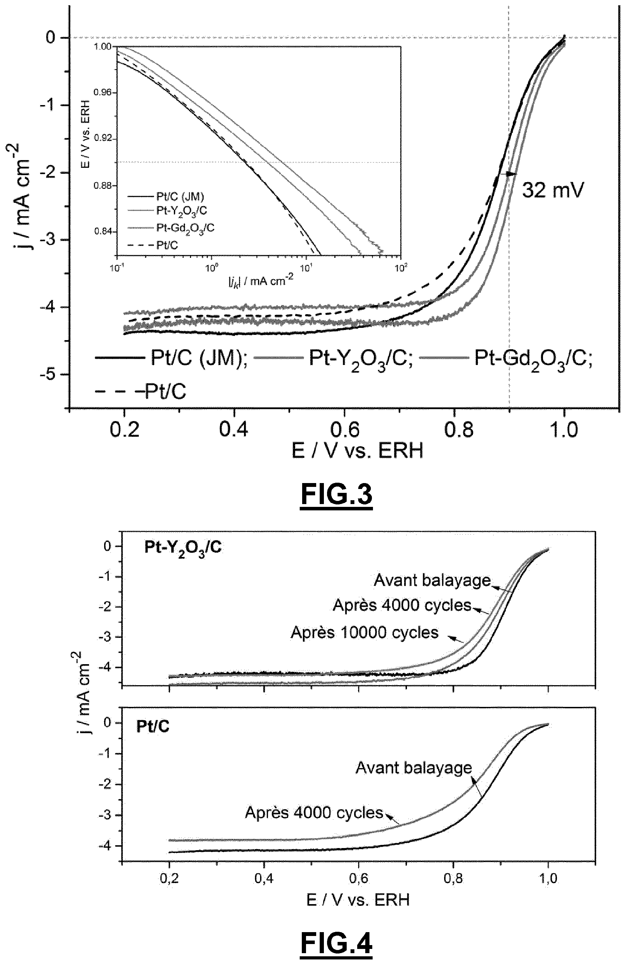

La figure 3 représente les voltamogrammes obtenus à une vitesse de rotation de 900 tr/min à 25°C avec des nanoparticules de type Pt-Y₂O₃/C, Pt-Gd₂O₃/C, Pt/C, et Pt/C (JM), dans un électrolyte HClO₄ (0.1 M) saturé à l'oxygène, la vitesse de variation de potentiel était de 5mV/s. La densité de courant est normalisée par la surface géométrique de l'électrode. Le graphique inséré représente un tracé de Tafel extrait à partir des données issues des expériences de voltammétrie à variation linéaire de potentiel montrant l'activité des nanoparticules vis-à-vis de la RRO.
La figure 4 représente les voltamogrammes à balayage linéaire et cyclique (« Linear sweep voltammograms ») présentant la stabilité de l'activité catalytique des nanoparticules Pt-Y₂O₃/C et Pt/C, avant cyclage, après 4000 cycles et après 10000 cycles, enregistrés dans un électrolyte HClO₄ (0.1 M) saturé à l'oxygène à une vitesse de rotation de 900 tr/min et à 25°C. La vitesse de variation de potentiel était de 5mV/s. La densité de courant est normalisée par la surface géométrique de l'électrode.
La figure 5 représente l'évolution de l'activité spécifique (SA) et de l'activité massique (MA) des nanoparticules Pt-Y₂O₃/C et Pt/C en fonction du nombre de cycles.
La figure 6 représente les spectres XPS de la couche atomique Pt 4f dans les nanoparticules Pt-Y₂O₃/C, Pt-Gd₂O₃/C et Pt/C, de la couche atomique Y 3d_{5/2} dans les nanoparticules Pt-Y₂O₃/C et de la couche atomique Gd 3d_{5/2} dans les nanoparticules Pt-Gd₂O₃/C. Ces spectres ont été acquis en utilisant une source de rayons X du Mg Kα.

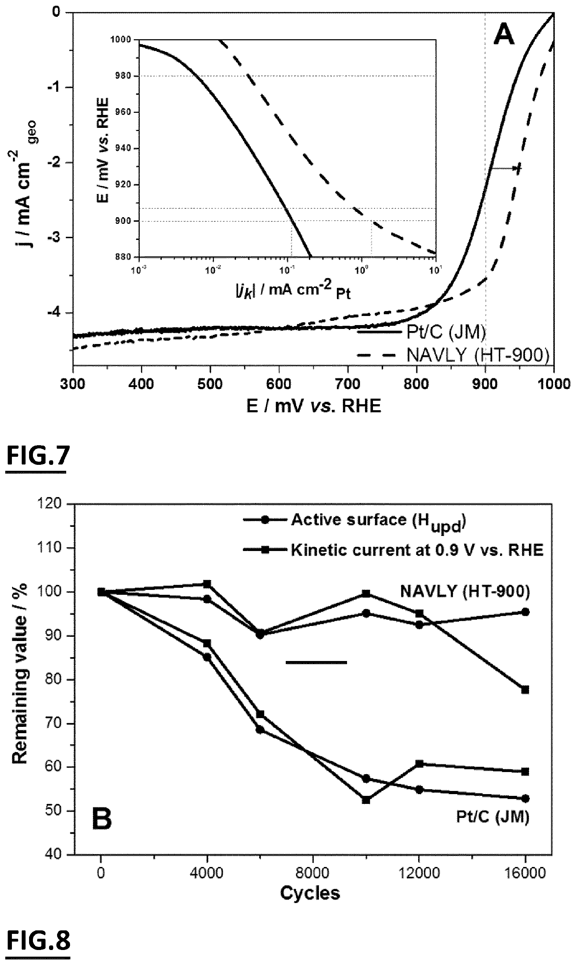

La figure 7 représente les voltamogrammes obtenus à une vitesse de rotation de 900 tr/min à 25°C avec des nanoparticules de type NAVLY (HT-900) et Pt/C (JM), dans un électrolyte HClO₄ (0.1 M) saturé à l'oxygène, la vitesse de variation de potentiel était de 5mV/s. La densité de courant est normalisée par la surface géométrique de l'électrode. Le graphique inséré représente un tracé de Tafel extrait à partir des données issues des expériences de voltamétrie à variation linéaire de potentiel montrant l'activité des nanoparticules vis-à-vis de la RRO.
La figure 8 représente l'évolution de la surface déterminée de la zone du dépôt sous-potentiel d'hydrogène (H_{upd}) et du courant cinétique (*J_{K}*) des nanoparticules de type NAVLY (HT-900) et Pt/C (JM) en fonction du nombre de cycles.

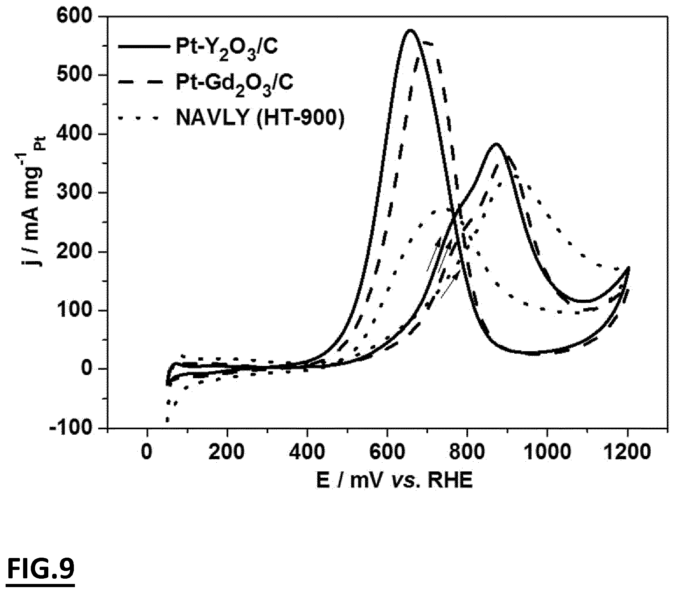

La figure 9 représente les voltamogrammes obtenus à 25°C avec des nanoparticules de type de Pt-Y₂O₃/C, de Pt-Gd₂O₃/C et de type NAVLY (HT-900) dans un électrolyte comprenant de l'eau, de l'acide sulfurique en une concentration molaire égale à 0,5M et du méthanol (99,9%, en une concentration molaire égale à 0,5M), la vitesse de variation de potentiel était de 50 mV/s.

Selon l'invention, l'expression « compris entre X et Y » inclut les bornes X et Y dans la plage de valeurs.

Les différents aspects de l'invention sont illustrés par les exemples qui suivent. Ces exemples ne constituent pas une limitation de la portée de l'invention.

Sauf mentions contraires, les réactifs et les solvants utilisés dans les exemples suivants sont commercialisés par la société Alfa Aesar et sont de qualité ACS Reagent. L'azote, le dioxygène, l'argon et le monoxyde de carbone de pureté 99.995 vol. % sont commercialisés par la société Air Liquide.

Dans les exemples, la pression est celle atmosphérique (101 325 Pa), la température est celle ambiante (environ 25 °C), et les pourcentages sont massiques, sauf indications contraires.

La méthode de mesure de la taille est basée sur l'utilisation de la microscopie électronique en transmission (TEM) au moyen d'un microscope JEOL® (JEM-2001) équipé d'un dispositif de spectroscopie de rayons X à dispersion d'énergie. L'échantillon de nanoparticules est dispersé dans l'éthanol puis une goutte de cette dispersion est appliquée sur une grille en cuivre recouverte d'un film de carbone. L'éthanol est ensuite évaporé. Cette manipulation a été effectuée plusieurs fois afin d'obtenir plusieurs images de ces nanoparticules. Le diamètre de Féret des nanoparticules d'après les images obtenues. La taille des nanoparticules d'après les images obtenues par TEM est mesurée au moyen du logiciel ImageJ. La distribution de taille des nanoparticules a été réalisée en évaluant la taille de 300 nanoparticules sur différentes images obtenues par TEM. Cette méthode est appliquée pour mesurer la taille des nanoparticules dans les exemples 1, 2 et 7.

La méthode de détermination du ratio stoechiométrique entre le platine et la terre rare est basée sur l'utilisation de l'ICP-OES (Optima 2000 DV, Perkin-Elmer). Cette méthode est appliquée pour déterminer le ratio stoechimétrique entre Pt et Y ou Pt et Gd des nanoparticules dans les exemples 1 et 2.

La méthode de détermination de la structure électronique des éléments composants les nanoparticules est basée sur l'utilisation de la spectroscopie de photoelectrons XPS.

La méthode de détermination de la surface spécifique des nanoparticules consiste à mesurer le courant obtenu à un potentiel de 0,9 V vs. ERH en utilisant l'électrode tournante à disque (Rotating Disk Electrode ou RDE) dans une cellule électrochimique standard à 3 électrodes comprenant un électrolyte HClO₄ (0.1M) saturé à l'oxygène à température de 25°C), la vitesse de variation de potentiel était de 5mV/s. La densité de courant cinétique est normalisée par la surface électrochimiquement active de platine. Cette méthode est appliquée pour mesurer l'activité spécifique des nanoparticules dans les exemples 5 et 7.

La méthode de détermination de l'activité massique des nanoparticules consiste à mesurer le courant obtenu à un potentiel de 0,9 V vs. ERH en utilisant l'électrode tournante à disque (Rotating Disk Electrode ou RDE) dans une cellule électrochimique standard à 3 électrodes comprenant un électrolyte HClO₄ (0,1M) saturé à l'oxygène à température de 25°C), la vitesse de variation de potentiel était de 5mV/s. La densité de courant cinétique est normalisée par la masse de platine. Cette méthode est appliquée pour mesurer l'activité massique des nanoparticules dans les exemples 5 et 7.

### Exemple 1. Synthèse de nanoparticules Pt-Y₂O₃/C

L'hexahydrate de sodium-hexachloro-platinate (Na₂PtCl₆ 6H₂O) (31,3% en masse de Pt, 114,6 mg), le YCl₃ anhydre (99%, 16,7 mg) et l'acétate de sodium anhydre (99%, 126,1 mg) sont ajoutés dans un ballon en verre et mélangés avec 25 mL de méthanol sous agitation magnétique. L'ensemble du mélange est placé sous atmosphère d'azote (99%) pendant 20 min à la suite desquelles, l'atmosphère d'azote est remplacée par une atmosphère de monoxyde de carbone (CO, 99%) pendant 10 minutes. Le montage est alors scellé et le mélange est maintenu pendant 24 h sous une atmosphère de CO à une température fixée entre 50 et 55 °C sous reflux. L'agitation est maintenue tout au long des 24 h. Après 24 h, l'atmosphère de CO est remplacée par une atmosphère d'azote et la température du milieu réactionnel décroît jusqu'à la température ambiante.
Le support carboné (Vulcan® XC-72, 230,6 mg), préalablement activé à 400 °C sous une atmosphère d'azote pendant 4 h, est alors introduit dans le ballon. Le mélange est homogénéisé par agitation magnétique pendant 12 h sous atmosphère d'azote. Le méthanol est par la suite totalement évaporé en chauffant le mélange réactionnel à une température de 80 °C et la poudre de Pt-Y₂O₃/C obtenue est séchée à 60°C sous air.
La poudre ainsi obtenue est récupérée et chauffée pendant 2h à 300 °C sous une atmosphère contenant des pourcentages molaires de 95% d'azote et 5% de dihydrogène.
La poudre obtenue est alors lavée à l'eau ultra-pure (18 MΩ cm, Milli-Q, Millipore) puis filtrée et ensuite séchée à 60°C sous atmosphère inerte pendant 12 h.
On obtient des nanoparticules Pt-Y₂O₃/C sous forme de poudre (297 mg, taux de charge métallique de 14,96 %).
Les nanoparticules Pt-Y₂O₃/C (Figure 1) ont une taille moyenne de 2,3 ± 0,58 nm mesurée par la méthode TEM.
Les nanoparticules Pt-Y₂O₃ ont un ratio stoechiométrique entre Pt et Y (Pt/Y) de 8,5 mesure par ICP.
Les nanoparticules Pt-Y₂O₃ possède un oxyde Y₂O₃ comme démontré à la figure 6 par la méthode XPS.

### Exemple 2. Synthèse de nanoparticules Pt-Gd₂O₃/C

Les nanoparticules Pt-Gd₂O₃/C sont obtenues suivant le protocole expérimental décrit à l'exemple 1 à partir d'hexahydrate de sodium-hexahloro-platinate (144,2 mg), de GdCl₃ (22,5 mg) et d'acétate de sodium (126,1 mg).

On obtient des nanoparticules Pt-Gd₂O₃/C sous forme de poudre (297 mg, taux de charge métallique de 15,41% mesuré par ICP).

Les nanoparticules Pt-Gd₂O₃/C (Figure 2) ont une taille moyenne de 1,9 ± 0,45 nm mesurée par la méthode TEM.

Les nanoparticules Pt-Gd₂O₃ ont un ratio stoechiométrique entre Pt et Gd (Pt/Gd) de 3,5 mesuré par ICP.

Les nanoparticules Pt-Gd₂O₃ possède un oxyde Gd₂O₃ comme démontré à la figure 6 par la méthode XPS.

### Exemple 3. Préparation d'une cathode comprenant des nanoparticules Pt-Y₂O₃/C

Une encre catalytique est préparée avec 10 mg de poudre de nanoparticules Pt-Y₂O₃/C obtenue à l'exemple 1 mise en suspension dans 1,25 mL d'eau ultra pure (qualité MILLIQ) et 250 µL d'une solution à 5% de Nafion®(Aldrich). La suspension obtenue est homogénéisée pendant 2 h.

Ensuite, 3 µL de cette encre sont déposés sur l'électrode de carbone vitreux (GCE) ayant un diamètre de 3 mm et préalablement polie avec un mélange d'alumine et d'eau ultra-pure (18 MΩ cm, Milli-Q, Millipore). Cette électrode est ensuite séchée sous atmosphère d'argon et est utilisée comme électrode de travail (WE).

La surface du disque de l'embout est de 0,07 cm². Le disque de carbone avec la couche catalytique est utilisé comme électrode de travail (WE). La teneur en métal (Pt+Y) de la couche catalytique sur la WE est de 52 µg.cm⁻².

### Exemple 4. Préparation d'une cathode comprenant des nanoparticules Pt-Gd₂O₃/C

Une électrode de travail est préparée selon le protocole expérimental décrit à l'exemple 3 à partir d'une encre catalytique comprenant 10 mg de poudre de nanoparticules Pt-Gd₂O₃/C obtenue à l'exemple 2 mise en suspension dans 1,25 mL d'eau ultra pure (qualité MILLIQ) et 250 µL d'une solution à 5 % de Nafion®(Aldrich).

La teneur en métal (Pt+Gd) de la couche catalytique sur la WE est de 52 µg.cm⁻².

### Exemple 5. Mesures électrochimiques

Les cathodes (électrode de travail - WE) testées sont :
- une cathode comprenant des nanoparticules Pt-Y₂O₃/C préparée selon le protocole expérimentale de l'exemple 3,
- une cathode comprenant des nanoparticules Pt-Gd₂O₃/C préparée selon le protocole expérimentale de l'exemple 4,
- une cathode comprenant des nanoparticules Pt/C préparée selon le protocole expérimentale de l'exemple 3, où les nanoparticules Pt/C sont préparées selon le protocole expérimental de l'exemple 1 à partir d'hexahydrate de sodium-hexachloro-platinate (144 mg) et d'acétate de sodium (126 mg).

Les mesures électrochimiques ont été enregistrées sur un Potentiostat/Galvanostat Autolab et réalisées dans une cellule électrochimique standard à 3 électrodes. La RDE est utilisée pour étudier l'activité de la RRO. La contre électrode (CE) et l'électrode de référence (RE) sont respectivement une plaque de carbone vitreux et l'électrode réversible à hydrogène (ERH). L'acide perchlorique 0,1 mol/L est utilisée comme électrolyte. La surface de l'électrode WE est tout d'abord électrochimiquement nettoyée en effectuant des cycles à 50 mV/s entre 0,05 et 1,2 V par rapport à l'électrode ERH jusqu'à l'obtention de voltamogrammes cycliques stables (CVs). Lors de la réalisation des mesures électrochimiques, l'électrode est tout d'abord cyclée 20 fois entre 0,05 et 1,2 V par rapport à l'ERH dans l'électrolyte préalablement saturé avec de l'azote. Par la suite, l'électrolyte est saturé par le dioxygène pendant 10 minutes. Les expériences visant à caractériser l'activité catalytique des catalyseurs vis-à-vis de la RRO sont réalisées à l'aide d'une électrode tournante à disque (RDE). Des vitesses de rotation de 400, 900, 1600 et 2500 rpm sont utilisées pour étudier la cinétique de la RRO. Pour réaliser ces expériences, la voltamétrie linéaire est utilisée. L'électrode subit alors une variation négative de potentiel entre 1,1 et 0,2 V par rapport à l'ERH. La vitesse de variation linéaire de potentiel est de 5 mV/s.

Les voltamogrammes obtenus avec les cathodes comprenant respectivement des nanoparticules de Pt-Y₂O₃/C, de Pt-Gd₂O₃/C et de Pt/C sont présentés sur la Figure 3.

Au potentiel de 0,9 V par rapport à l'ERH et à 900 rpm, on observe que l'activité spécifique de nanoparticules de Pt-Y₂O₃/C et de Pt-Gd₂O₃/C est respectivement de 278 µA.cm⁻²_{Pt} et de 142 µA.cm⁻²_{Pt} contrairement à l'activité spécifique de nanoparticules de Pt/C qui est de 100 µA.cm⁻²_{Pt}.

L'activité spécifique des nanoparticules de catalyseur selon l'invention est donc au moins 1,4 fois supérieure à celle des nanoparticules à base de platine ne comprenant pas d'oxyde de terre rare.

Au potentiel de 0,9 V par rapport à l'ERH, on observe également que l'activité massique des nanoparticules de Pt-Y₂O₃/C et de Pt-Gd₂O₃/C est respectivement de 194 mA.mg⁻¹_{Pt} et de 112 mA.mg⁻¹_{Pt} contrairement à l'activité massique des nanoparticules de Pt/C qui est de 54,9 mA.mg⁻¹_{Pt}.

L'activité massique des nanoparticules de catalyseur selon l'invention est donc au moins 2 fois supérieure à celle des nanoparticules à base de platine ne comprenant pas d'oxyde de terre rare.

L'activité catalytique des nanoparticules Pt-Y₂O₃/C et Pt-Gd₂O₃/C vis-à-vis de la RRO est augmentée par rapport à l'activité catalytique des nanoparticules Pt/C avec un déplacement positif du potentiel de demi-vague pour Pt-Y₂O₃/C et Pt-Gd₂O₃/C respectivement de 32 et 25 mV par rapport à ERH par rapport au potentiel de demi-vague de Pt/C.

L'activité catalytique des nanoparticules selon l'invention vis-à-vis de la RRO est donc 4-5 supérieure à l'activité catalytique de nanoparticules de platine vis-à-vis de la RRO. La cinétique de la RRO catalysée par des nanoparticules selon l'invention est plus de deux fois supérieure à la cinétique de la RRO catalysée par des nanoparticules de platine.

### Exemple 6. Stabilité des cathodes comprenant respectivement des nanoparticules Pt-Y₂O₃/C

Les cathodes testées sont :
- une cathode comprenant des nanoparticules Pt-Y₂O₃/C préparée selon le protocole expérimentale de l'exemple 3,
- une cathode comprenant des nanoparticules Pt/C préparée selon le protocole expérimentale de l'exemple 3. Les nanoparticules Pt/C sont préparées selon le protocole expérimental de l'exemple 1 à partir d'hexahydrate de sodium-hexachloro-platinate (144 mg) et d'acétate de sodium (126 mg).

Les mesures électrochimiques ont été enregistrées à l'aide d'un Potentiostat/Galvanostat Autolab et réalisées dans une cellule électrochimique standard à 3 électrodes. La RDE est utilisée pour étudier l'activité des catalyseurs vis-à-vis de la RRO. La contre électrode (CE) et l'électrode de référence (RE) sont respectivement une plaque de carbone vitreux et l'électrode réversible à hydrogène (ERH). L'acide perchlorique 0,1 mol/L est utilisée comme électrolyte. La surface de l'électrode WE est tout d'abord électrochimiquement nettoyée en effectuant un cycle à 50 mV/s entre 0,05 et 1,2 V par rapport à l'électrode RHE jusqu'à l'obtention de voltamogrammes cycliques stables (CVs).

Les mesures électrochimiques ont été réalisées lorsque l'électrode est cyclée 1000, 4000, 6000, 8500 et 10000 fois entre 0,1 et 1,0 V par rapport à l'ERH avec une vitesse de variation linéaire de potentiel est de 50 mV/s dans l'électrolyte préalablement saturé avec de l'azote. Par la suite, l'électrolyte est saturé par le dioxygène pendant 10 min. Les expériences de RRO sont réalisées à l'aide d'une électrode tournante à disque (RDE). Des vitesses de rotation de 400, 900, 1600 et 2500 rpm sont utilisées pour étudier la cinétique de la RRO. Pour réaliser ces expériences, la voltammétrie linéaire est utilisée.

Les voltamogrammes obtenus avec les cathodes comprenant respectivement des nanoparticules Pt-Y₂O₃/C et Pt/C sont présentés sur la Figure 4. La figure 5 représente l'évolution de l'activité spécifique (SA) et de l'activité massique (MA) des nanoparticules Pt-Y₂O₃/C et Pt/C en fonction du nombre de cycles. La surface active (ESA) est calculée à partir de la coulométrie du pic d'oxydation de CO (CO-stripping) qui est divisée par une coulométrie de référence de 420 µC.cm⁻². On obtient ainsi la surface électrochimiquement active du catalyseur (ESA). L'activité spécifique (SA) est calculée en divisant le courant cinétique à 0,9 V/ERH par l'ESA. L'activité massique (MA) est calculée en divisant le courant cinétique à 0,9 V /ERH par la masse de platine dans le catalyseur.

Après 4000 cycles voltammetriques la surface spécifique (SA) du Pt-Y₂O₃/C est de 1,3 fois supérieure au Pt/C, et la masse spécifique de 1,81 fois supérieure au Pt/C.

L'activité massique des nanoparticules selon l'invention vis-à-vis de la RRO est donc 1,89 fois supérieure à la cinétique des nanoparticules de platine vis-à-vis de la RRO après 6000 cycles.

### Exemple 7. Comparaison de l'activité spécifique et de l'activité massique des nanoparticules Pt-Y₂O₃/C et Pt-Gd₂O₃/C respectivement obtenues par le procédé selon l'invention et par le procédé « water in oil »

### - Préparation de nanoparticules Pt-Y₂O₃/C selon la méthode « water in oil »

Deux microémulsions sont préparées par mélange de 5,60 mL de Brij30 (Sigma-Aldrich), 1 mL eau ultra pure (Milli-Q, Millipore) et 27,35 mL de n-heptane (Sigma-Aldrich).

Dans la phase aqueuse de la première microémulsion, d'YCl₃ (9,8 mg) et d'hexahydrate de sodium-hexachloro-platinate (84,3 mg) sont dissous.

Dans la phase aqueuse de la seconde microémulsion, du borohydrure de sodium (114 mg) est dissous.

Les deux microémulsions obtenues sont mélangées et le support carboné, préalablement activé à 400°C sous une atmosphère d'azote pendant 2 h (Vulcan® XC-72, 135 mg), est alors introduit. Le mélange est ensuite agité mécaniquement pendant 2 h sous atmosphère d'azote. Les nanoparticules de catalyseur supportées obtenue sont filtrées, lavées plusieurs fois avec de l'acétone puis de l'eau ultra-pure (18 MΩ.cm), puis séchées à 60°C pendant 12 h. La poudre de nanoparticules ainsi obtenue est chauffée pendant 2 h à 100 °C sous une atmosphère contenant des pourcentages molaires de 95% d'azote et 5% de dihydrogène.

On obtient des nanoparticules Pt-Y₂O₃/C sous forme de poudre (144 mg, taux de charge métallique de 17% par ICP).

Les nanoparticules Pt-Y₂O₃/C ont une taille moyenne de 2,3 ± 0,59 nm mesurée par la méthode TEM.

### - Préparation de nanoparticules Pt-Gd₂O₃/C selon la méthode « water in oil »

Les nanoparticules Pt-Gd₂O₃/C sont préparées selon le protocole expérimental « water in oil » décrit ci-dessus à partir de GdCl₃ (15,8 mg) et d'hexahydrate de sodium-hexachloro - platinate (78,7 mg).

Les deux microémulsions obtenues sont mélangées et le support carboné, préalablement activé à 400°C sous une atmosphère d'azote pendant 2 h (Vulcan® XC-72, 147 mg), est alors introduit.

Les nanoparticules de catalyseur supportées obtenue sont filtrées, lavées plusieurs fois avec de l'acétone puis de l'eau ultra-pure (18 MΩ.cm), puis séchées à 60°C pendant 12 h.

La poudre de nanoparticules ainsi obtenue est chauffée pendant 2 h à 100 °C sous une atmosphère contenant des pourcentages molaires de 95% d'azote et 5% de dihydrogène.

On obtient des nanoparticules Pt-Gd₂O₃/C sous forme de poudre (142 mg, taux de charge métallique de 15,4 % par ICP).

Les nanoparticules Pt-Gd₂O₃/C ont une taille moyenne de 2,25 ± 0,48 nm mesurée par la méthode TEM.

### - Préparation de cathode

Les cathodes comprenant respectivement des nanoparticules Pt-Y₂O₃/C et Pt-Gd₂O₃/C respectivement obtenues par le procédé « water in oil » décrit ci-dessus, sont préparées suivant le protocole expérimental décrit à l'exemple 3.

### - Mesures électrochimiques

L'activité spécifique et l'activité massique des nanoparticules Pt-Y₂O₃/C et Pt-Gd₂O₃/C obtenues par le procédé « water in oil » ont été mesurées dans les mêmes conditions expérimentales que celles mises en oeuvre dans le protocole expérimental décrit à l'exemple 5.

Au potentiel de 0,9 V vs. ERH, on observe que l'activité spécifique des nanoparticules Pt-Y₂O₃/C et Pt-Gd₂O₃/C est de 54,3 µA.cm⁻²_{Pt} et de 34,3 µA.cm⁻²_{Pt} contrairement à l'activité spécifique des nanoparticules Pt-Y₂O₃/C et Pt-Gd₂O₃/C selon l'invention qui est respectivement de 278 µA.cm⁻²_{Pt} et de 142 µA.cm⁻²_{Pt}.

Au potentiel 0,9 V par rapport à l'ERH, on observe que l'activité massique des nanoparticules Pt-Y₂O₃/C et Pt-Gd₂O₃/C est respectivement de 23,1 mA.mg⁻¹_{Pt} et de 13,4 mA.mg⁻¹_{Pt} contrairement à l'activité massique des nanoparticules Pt-Y₂O₃/C et Pt-Gd₂O₃/C selon l'invention qui est respectivement de 194 mA.mg⁻¹_{Pt} et de 112 mA.mg⁻¹_{Pt}.

L'activité catalytique des nanoparticules selon l'invention est 8,5 supérieure à celle des nanoparticules obtenues par le procédé « water in oil ».

### Exemple 8 : Synthèse de nanoparticules NAVLY (900-HT)

### - Préparation du support

Le support a été préparé selon le protocole expérimental décrit dans la publication Orfanidi et al., Appl. Catal. B, 2011, 106, 379.

20 mL d'acide nitrique (HNO₃, 65 % en poids) a été ajouté à 0,2 g de nanotubes de carbone multi-couches (pureté : 97 %, taille : 10-30 nm, Nanothinx S.A.). La solution ainsi obtenue a été chauffée sous reflux puis mélangée à température ambiante pendant 48h.

La poudre noire obtenue a été filtrée et lavée avec de l'eau ultra pure (Milli Q, Millipore) jusqu'à l'obtention d'un filtrat présentant un pH équivalent à 7, puis séchée à 100°C pendant 12h afin d'obtenir 0,19 g d'un support de nanotubes de carbone multi-couches et oxydés (MWCNT) avec un rendement de 95%.

### - Préparation du composé MOF Ce(HATPT)(ATPT)•nH₂O dans lequel ATPT représente le ligand aminotéréphthalate et n est compris entre 8 et 11 (INSAR-1(Ce)

2 moles de sodium d'hydroxyde (NaOH) ont été ajoutées dans une suspension comprenant 1 mole de l'acide 2-aminotéréphtalique (H₂ATPT, Acros Organics). La solution ainsi obtenue a été évaporée à sec. La poudre ainsi obtenue a été ajoutée dans de l'éthanol (≥ 99.8 %, CHROMASOLV, Sigma-Aldrich) à raison de 10 mL d'éthanol pour 10 mg de poudre, portée à reflux sous agitation pendant 1h, filtrée, rincée avec de l'eau bi-distillée et séchée sous air à température ambiante.

Le ligand 2-aminotéréphtalate di-sodique (Na₂ATPT) sous forme de poudre jaune a été obtenue avec un rendement de 90%.

30 à 50 mL d'acide chlorhydrique (37 %, Acros Organics) a été ajouté goutte à goutte à une solution comprenant 100 mg d'oxyde de cérium (STREM Chemicals) et 20 à 30 mL d'eau distillée sous agitation mécanique jusqu'à obtention d'une solution transparente. La solution ainsi obtenue a été évaporée à sec. Le résidu obtenu a été dissous dans 80 à 100 mL d'éthanol, puis du diéthyl-éther (≥ 99.9 %, CHROMASOLV, Sigma-Aldrich) a été ajouté goutte par goutte jusqu'à obtention de CeCl₃ sous forme d'un précipité. La solution ainsi obtenue a été filtrée et le précipité a été lavé avec 20 à 30 mL de diéthyl-éther, puis séché dans un dessiccateur à température ambiante pendant une durée comprise entre 12 et 24h.

La synthèse du composé MOF Ce(HATPT)(ATPT)•nH₂O a été réalisée selon le protocole expérimental décrit dans la publication Luo et al., Inorg. Chem. Acta, 2011, 368, 170.

2 moles de CeCl₃ et 3 moles du ligand Na₂ATPT obtenus ci-dessus ont été ajoutées à 50 mL d'eau distillée dans des conditions stoechiométriques sous agitation mécanique jusqu'à la formation d'un précipité de couleur jaune pâle. La solution ainsi obtenue a été filtrée et le précipité a été lavé avec de l'eau distillée, puis séché à l'air et à température ambiante.

Le résidu obtenu est le composé MOF : Ce(HATPT)(ATPT)•nH₂O avec un rendement de 90%.

### - Préparation des nanoparticules NAVLY (HT-900)

La synthèse des nanoparticules NAVLY (HT-900) a été réalisée selon le protocole décrit dans la publication N. Alonso-Vante, Fuel Cell, 2006, 6, 182.

L'hexahydrate de sodium-hexachloro-platinate (Na₂PtCl₆ 6H₂O) (31,3% en masse de Pt, 72,1 mg, Alfar Aesar) et l'acétate de sodium anhydre (99%, 63,1 mg) sont ajoutés dans un ballon en verre et mélangés avec 25 mL de méthanol (≥ 99.9 %, CHROMASOLV, Sigma-Aldrich) sous agitation magnétique.

L'ensemble du mélange est placé sous atmosphère d'azote (99%) pendant 20 min à température ambiante à la suite desquelles, l'atmosphère d'azote est remplacée par une atmosphère de monoxyde de carbone (CO, 99%) pendant 10 minutes. Le montage est alors scellé et le mélange est maintenu pendant 24 h sous une atmosphère de CO à une température de 55 °C sous reflux. L'agitation est maintenue tout au long des 24 h. Après 24 h, la solution ainsi obtenue est refroidie à température ambiante puis 115,2 mg de MWCNT obtenu ci-dessus préalablement mélangés à 14,2 mg d'INSAR-1(Ce) obtenu ci-dessous sont ajoutés à cette solution.

Le montage est à nouveau scellé sous atmosphère d'azote (99%) et le mélange est homogénéisé par agitation magnétique pendant 12 h sous atmosphère d'azote. Le méthanol est par la suite totalement évaporé en chauffant le mélange réactionnel à une température de 90 °C et la poudre obtenue est séchée à 60°C sous air pendant 12h.

La poudre séchée est récupérée et transférée dans une nacelle en céramique par la suite introduite dans un four. Parallèlement, une autre nacelle en céramique remplie d'une quantité d'urée comprise entre 20 et 50 mg a été placée dans le four, à côté de la nacelle en céramique remplie de la poudre séchée. Le four a été chauffé à 50°C sous atmosphère d'argon (≥ 99.99 %) pendant 30 min, puis la température a été augmentée de 10°C/min jusqu'à atteindre une température de 900°C maintenue pendant 2h sous atmosphère d'argon (≥ 99.99 %), puis la température a été diminuée jusqu'à température ambiante sous atmosphère d'argon. La poudre obtenue est alors lavée à l'eau ultra-pure (18 MΩ cm, Milli-Q, Millipore) puis filtrée et ensuite séchée à 60°C sous atmosphère inerte pendant 12 h.

On obtient des nanoparticules NAVLY (HT-900) sous forme de poudre (160 mg, taux de charge en platine de 18,9% et taux de charge en Cérium de 2,2% en masse par rapport à la masse totale de nanoparticules).

### Exemple 9 : Préparation d'une cathode comprenant des nanoparticules NAVLY (HT-900)

Une encre catalytique est préparée avec 5 mg de poudre de nanoparticules NAVLY (HT-900) obtenue à l'exemple 8 mise en suspension dans 532,5 mL d'eau ultra pure (qualité MILLIQ), 77,5 mL de 2-propanol et 40 µL d'une solution à 5% de Nafion®(Aldrich). La suspension obtenue est homogénéisée pendant 2 h.

Ensuite, 3 µL de cette encre sont déposés sur l'électrode de carbone vitreux (GCE) ayant un diamètre de 3 mm et préalablement polie avec une poudre d'alumine A5, puis successivement nettoyée avec de l'eau ultra-pure (18 MΩ cm, Milli-Q, Millipore), de l'éthanol, puis de l'eau ultra-pure. Cette électrode est ensuite séchée sous atmosphère d'argon et est utilisée comme électrode de travail (WE).

La surface du disque de l'embout est de 0,07 cm². Le disque de carbone avec la couche catalytique est utilisé comme électrode de travail (WE). La teneur en métal (Pt+Y) de la couche catalytique sur la WE est de 59,4 µg.cm⁻².

### Exemple 10. Mesures électrochimiques

Les cathodes (électrode de travail - WE) testées sont :
- une cathode comprenant des nanoparticules NAVLY (HT-900) préparée selon le protocole expérimentale de l'exemple 9,
- une cathode comprenant des nanoparticules Pt/C (JM) préparée selon le protocole expérimentale de l'exemple 3, où les nanoparticules Pt/C (JM) sont commercialisées sous la marque Johnson-Matthey® et comprennent 20% en masse de platine supporté sur noir de carbone par rapport à la masse totale des nanoparticules.

Les mesures électrochimiques ont été enregistrées dans les mêmes conditions expérimentales que celles décrites à l'exemple 5.

Le voltamogramme obtenu avec les cathodes comprenant respectivement des nanoparticules de type NAVLY (HT-900) et de Pt/C (JM) est présenté sur la Figure 7.

Au potentiel de 0,9 V par rapport à l'ERH et à 900 rpm, on observe que l'activité spécifique de nanoparticules de type NAVLY (HT-900) est de 1250 µA.cm⁻²_{Pt} contrairement à l'activité spécifique de nanoparticules de Pt/C (JM) qui est de 117 µA.cm⁻²_{Pt}.

L'activité spécifique des nanoparticules de catalyseur de type NAVLY (HT-900) selon l'invention est donc au moins 12 fois supérieure à celle des nanoparticules à base de platine ne comprenant pas d'oxyde de terre rare.

Au potentiel de 0,9 V par rapport à l'ERH, on observe également que l'activité massique des nanoparticules de type NAVLY (HT-900) est de 830 mA.mg⁻¹_{Pt} contrairement à l'activité massique des nanoparticules de Pt/C (JM) qui est de 86 mA.mg⁻¹_{Pt}.

L'activité massique des nanoparticules de catalyseur selon l'invention est donc au moins 10 fois supérieure à celle des nanoparticules à base de platine ne comprenant pas d'oxyde de terre rare.

L'activité catalytique des nanoparticules de type NAVLY (HT-900) vis-à-vis de la RRO est largement augmentée par rapport à l'activité catalytique des nanoparticules Pt/C (JM) avec un déplacement positif du potentiel de demi-vague nanoparticules de type NAVLY (HT-900) de 25 mV par rapport à ERH par rapport au potentiel de demi-vague de Pt/C.

L'activité catalytique des nanoparticules selon l'invention vis-à-vis de la RRO est donc dix fois supérieure à l'activité catalytique de nanoparticules de platine vis-à-vis de la RRO. La cinétique de la RRO catalysée par des nanoparticules selon l'invention est quinze fois supérieure à la cinétique de la RRO catalysée par des nanoparticules de platine.

### Exemple 11. Stabilité des cathodes comprenant respectivement des nanoparticules de type NAVLY (HT-900)

Les cathodes testées sont :
- une cathode comprenant des nanoparticules de type NAVLY (HT-900) préparée selon le protocole expérimentale de l'exemple 9,
- une cathode comprenant des nanoparticules Pt/C (JM) préparée selon le protocole expérimentale de l'exemple 3. Les nanoparticules Pt/C sont commercialisées sous la marque Johnson-Matthey® (JM) et comprennent 20% en masse de platine supporté sur noir de carbone par rapport à la masse totale des nanoparticules.

Les mesures électrochimiques ont été enregistrées dans les mêmes conditions expérimentales que celles décrites à l'exemple 6.

Le voltamogramme obtenu avec les cathodes comprenant respectivement des nanoparticules de type NAVLY (HT-900) et Pt/C (JM) sont présentés sur la Figure 8.

La figure 8 représente l'évolution de la surface active à partir de H_{upd} et du courant cinétique à 0,9 V vs RHE des nanoparticules de type NAVLY (HT-900) et Pt/C (JM) en fonction du nombre de cycles. La surface active (ESA) est calculée à partir de la coulométrie dans la région H_{upd} qui est divisée par une coulométrie de référence de 210 µC.cm⁻². On obtient ainsi la surface électrochimiquement active du catalyseur (ESA).

Après 16000 cycles voltamétriques la surface active restante des nanoparticules de type NAVLY (HT-900) est de 95%, et 53% pour Pt/C (JM),

Le courant cinétique restant à 0,9 V vs RHE des nanoparticules de type NAVLY (HT-900) selon l'invention vis-à-vis de la RRO est 84%, et de 47% pour Pt/C (JM).

### Exemple 12 : Mesure de l'activité massique des nanoparticules Pt-Y₂O₃/C, Pt-Gd₂O₃/C et de type NAVLY (HT-900) obtenues par les procédés selon l'invention dans la réaction d'oxydation du méthanol (MOR)

### - préparation des électrodes de travail comprenant respectivement les nanoparticules Pt-Y₂O₃/C, Pt-Gd₂O₃/C et de type NAVLY (HT-900) :

Une encre catalytique est préparée avec 5 mg de poudre de nanoparticules Pt-Y₂O₃/C obtenue à l'exemple 1 mise en suspension dans 1 mL d'éthanol et 20 µL d'une solution à 10% de Nafion®(Aldrich). La suspension obtenue est homogénéisée pendant 10 minutes.

Ensuite, 20 µL de cette encre sont déposés sur l'électrode de carbone vitreux (GCE) ayant un diamètre de 3 mm et préalablement polie avec un mélange d'alumine et d'eau ultra-pure (18 MΩ cm, Milli-Q, Millipore). Cette électrode est ensuite séchée sous atmosphère d'argon et est utilisée comme électrode de travail (WE).

Les cathodes comprenant des nanoparticules Pt-Gd₂O₃/C et de type NAVLY (HT-900) sont préparées selon le protocole expérimental décrit ci-dessus.

Les mesures électrochimiques ont été enregistrées sur un Potentiostat/Galvanostat Autolab et réalisées dans une cellule électrochimique standard à 3 électrodes comprenant :
- une électrode comprenant respectivement des nanoparticules Pt-Y₂O₃/C, Pt-Gd₂O₃/C et de type NAVLY (HT-900) comme électrode de travail (WE),
- une plaque de carbone vitreux comme contre-électrode,
- une électrode à hydrogène réversible (RHE) comme électrode de référence, et
- une solution électrolytique acide comprenant de l'eau, de l'acide sulfurique (96%, Merck) en une concentration molaire égale à 0,5M et du méthanol (99,9%, Sigma-Aldrich) en une concentration molaire égale à 0,5M.

La surface de l'électrode WE est tout d'abord électrochimiquement nettoyée en effectuant des cycles à 50 mV/s entre 0,05 et 1,2 V par rapport à l'électrode de référence jusqu'à l'obtention de voltamogrammes cycliques stables (CVs).

Les voltamogrammes obtenus avec les électrodes comprenant respectivement des nanoparticules de Pt-Y₂O₃/C, de Pt-Gd₂O₃/C et de type NAVLY (HT-900) sont présentés sur la Figure 9.

On observe que l'activité massique aux pics aller des nanoparticules de Pt-Y₂O₃/C, de Pt-Gd₂O₃/C et de type NAVLY (HT-900) est respectivement de 382 mA.mg⁻¹_{Pt}, 358 mA.mg⁻¹_{Pt} et 318 mA.mg⁻¹_{Pt} contrairement aux activités massiques des nanoparticules comprenant un oxyde de terre rare sur lequel est présent en surface du platine, notamment telles que les nanoparticules décrites dans les documents Tang et al., J. Power Sources, 2006, 162, 1067-1072 et US 2013/165318 qui sont inférieures à 93 mA.mg⁻¹_{Pt}.

L'activité massique des nanoparticules de catalyseur selon l'invention est donc au moins 3 fois supérieure à celle des nanoparticules décrites dans les documents Tang et al., J. Power Sources, 2006, 162, 1067-1072 et US 2013/165318.

Il a été mis en évidence que cette importante différence d'activité massique entre les nanoparticules selon l'invention et les nanoparticules telles que celles décrites dans les documents Tang et al., J. Power Sources, 2006, 162, 1067-1072 et US 2013/165318 est due à une différence structurelle entre ces deux types de nanoparticules à base de platine et d'oxyde de terre rare, notamment les nanoparticules selon l'invention présentent la terre rare sous forme oxydée en surface du platine contrairement aux nanoparticules décrites dans ces documents qui comprennent du platine et de la terre rare oxydée.

## Revendications

1. Nanoparticules comprenant au moins un composé de platine comprenant au moins du platine et au moins une terre rare, ladite terre rare étant présente sous forme oxydée en surface du platine.

2. Nanoparticules selon la revendication 1, dans lequel le composé de platine présente la formule (I) suivante :
Pt-MₓO_{y}
où x est le nombre d'atomes terre rare M présents et y est le nombre d'atomes d'oxygène présents.

3. Nanoparticules selon la revendication 1 ou 2, pour lesquelles les nanoparticules de catalyseur sont supportées.

4. Nanoparticules selon la revendication 1 ou 2, pour lesquelles l'élément de terre rare est l'Yttrium, le Gadolinium, le Samarium, le Cérium, l'Europiurn, le Praséodyme, le Scandium, le Terbium, l'Ytterbiurn, le Thulium ou l'un quelconque de leurs mélanges.

5. Nanoparticules selon l'une quelconque des revendications 1 à 4, pour lesquelles l'élément de terre rare est l'yttrium ou le gadolinium.

6. Nanoparticules selon l'une quelconque des revendications 1 à 4, pour lesquelles l'activité spécifique desdites nanoparticules est supérieure ou égale à 120 µA.cm⁻²_{Pt}.

7. Nanoparticules selon l'une quelconque des revendications 1 à 4, pour lesquelles l'activité massique desdites nanoparticules est supérieure ou égale à 80 mA.mg⁻¹_{Pt}.

8. Nanoparticules selon l'une quelconque des revendications précédentes, pour lesquelles la taille moyenne des nanoparticules est comprise entre 0,1 et 10 nm, par exemple entre 0,5 et 5 nm, plus spécifiquement entre 2 et 3 nm.

9. Procédé de préparation de nanoparticules comprenant une étape de traitement thermique comprenant :
(i) une étape de mise en contact de précurseurs de nanoparticules, comprenant du platine et au moins une terre rare, avec du monoxyde de carbone (CO),
(ii) la carbonylation du produit obtenu par traitement thermique et,
(iii) de préférence l'addition d'un support, et
(iv) un traitement thermique à une température suffisante pour former des oxydes de terre rare au moins en surface des nanoparticules formées.

10. Procédé selon la revendication 9 comprenant :
a. Le mélange sous agitation et sous atmosphère inerte d'un sel de Pt, d'un sel de terre rare, d'un sel d'acétate, et d'un solvant,
b. Le chauffage du mélange préalablement obtenu sous atmosphère comprenant du monoxyde de carbone.
c. Le remplacement de l'atmosphère contenant du monoxyde de carbone par une atmosphère inerte, par exemple d'azote, et de préférence l'addition d'un support de nanoparticules,
d. L'évaporation du solvant afin d'obtenir une poudre de nanoparticules,
e. Le traitement thermique de la poudre de nanoparticules à une température comprise entre 80°C et 600°C sous une atmosphère comprenant d'un gaz inerte, en présence de dihydrogène,
f. Le lavage de la poudre catalytique traitée afin d'obtenir des nanoparticules.

11. Procédé selon la revendication 9 ou 10, pour lequel le procédé comprend en outre avant l'étape d, l'introduction sous atmosphère inerte et à température ambiante d'un support dans le mélange obtenu à l'étape c.

12. Procédé selon la revendication 10 ou 11, pour lequel le support est un support de carbone, de préférence un support de carbone activé.

13. Procédé de préparation de nanoparticules comprenant :
(v) une étape de mise en contact d'au moins un précurseur de nanoparticules comprenant du platine avec un sel d'acétate et du monoxyde de carbone (CO),
(vi) la carbonylation du produit obtenu par traitement thermique,
(vii) l'addition d'un précurseur de nanoparticules comprenant au moins un polymère de coordination (MOF) et au moins une terre rare, et optionnellement d'un support, et
(viii) un traitement thermique à une température suffisante pour former des oxydes de terre rare au moins en surface des nanoparticules formées.

14. Procédé selon la revendication 13 comprenant :
g. le mélange sous agitation et sous atmosphère inerte d'un sel de Pt, d'acétate de sodium et d'un solvant,
h. le chauffage du mélange préalablement obtenu sous une atmosphère contenant du monoxyde de carbone,
i. le remplacement de l'atmosphère contenant du monoxyde de carbone par une atmosphère inerte,
j. l'addition d'un composé MOF comprenant au moins une terre rare et au moins un ligand choisi parmi 2-aminotéréphtalate, 1,3,5-benzènetricarboxylate, 5-aminoisophtalate, 4,4'-oxybis(benzoate), 1,2,4,5-benzènetétracarboxylate, ou 4,4'-biphényldicarboxylate et de préférence l'addition d'un support de carbone, notamment des nanotubes de carbone,
k. l'évaporation du solvant afin d'obtenir une poudre de nanoparticules,
l. le traitement thermique de la poudre de nanoparticules à une température comprise entre 100 et 1000 °C sous une atmosphère d'un gaz inerte,
m. le lavage de la poudre catalytique traitée afin d'obtenir des nanoparticules.

15. Procédé selon la revendication 13 ou 14, pour lequel la quantité du composé MOF introduite à l'étape j. est comprise entre 10 et 20% en masse, de préférence 10% en masse en masse par rapport à la masse de carbone introduite à l'étape j. avec le composé MOF.

16. Procédé selon l'une quelconque des revendications 13 à 15, comprenant en outre à l'étape j, l'introduction sous atmosphère inerte et à température ambiante d'un support dans le mélange obtenu à l'étape i.

17. Procédé selon l'une quelconque des revendications 13 à 16, pour lequel le support est constitué de nanotubes de carbone, de préférence des nanotubes de carbone multi-couches pouvant être notamment oxydés.

18. Encre comprenant des nanoparticules selon l'une quelconque des revendications 1 à 8 ou susceptibles d'être obtenues par le procédé selon l'une quelconque des revendications 9 à 12 et/ou le procédé selon l'une quelconque des revendications 13 à 17.

19. Cathode de pile à combustible à hydrogène comprenant des nanoparticules selon l'une quelconque des revendications 1 à 8 ou susceptibles d'être obtenues par le procédé selon l'une quelconque des revendications 9 à 12 et/ou le procédé selon l'une quelconque des revendications 13 à 17.

20. Cathode selon la revendication 19, pour laquelle les nanoparticules sont déposées sur la surface de la cathode au moyen d'une encre selon la revendication 18.

21. Utilisation des nanoparticules selon l'une quelconque des revendications 1 à 5, ou susceptibles d'être obtenues par le procédé selon l'une quelconque des revendications 9 à 12 et/ou le procédé selon l'une quelconque des revendications 13 à 17, ou d'une encre selon la revendication 18, en tant que catalyseur pour la réaction de réduction du dioxygène (RRO) en milieu acide.

## Patentansprüche

1. Nanopartikel, umfassend mindestens eine Platinverbindung, umfassend mindestens Platin und mindestens eine Seltenerde, wobei die Seltenerde oxidierter Form auf der Oberfläche des Platins vorhanden ist.

2. Nanopartikel nach Anspruch 1, wobei die Platinverbindung die folgende Formel (I) aufweist:
Pt-MₓO_{y}
wobei x die Anzahl von vorhandenen Seltenerdatomen M ist, und y die Anzahl von vorhandenen Sauerstoffatomen ist.

3. Nanopartikel nach Anspruch 1 oder 2, wobei die Katalysatornanopartikel getragen werden.

4. Nanopartikel nach Anspruch 1 oder 2, wobei das Seltenerdelement Yttrium, Gadolinium, Samarium, Cerium, Europium, Praseodym, Scandium, Terbium, Ytterbium, Thulium oder eine beliebige ihrer Mischungen ist.

5. Nanopartikel nach einem beliebigen der Ansprüche 1 bis 4, wobei das Seltenerdelement Yttrium oder Gadolinium ist.

6. Nanopartikel nach einem beliebigen der Ansprüche 1 bis 4, wobei die spezifische Aktivität der Nanopartikel größer als oder gleich wie 120 µA.cm⁻²_{Pt} ist.

7. Nanopartikel nach einem beliebigen der Ansprüche 1 bis 4, wobei die Massenaktivität der Nanopartikel größer als oder gleich wie 80 mA.mg⁻¹_{Pt} ist.

8. Nanopartikel nach einem beliebigen der vorhergehenden Ansprüche, wobei die mittlere Größe der Nanopartikel im Bereich zwischen 0,1 und 10 nm liegt, z. B. zwischen 0,5 und 5 nm, insbesondere zwischen 2 und 3 nm.

9. Verfahren zur Herstellung von Nanopartikeln, umfassend einen Schritt des thermischen Behandelns, umfassend:
(i) einen Schritt des In-Kontakt-Bringens von Nanopartikelvorläufern, umfassend Platin und mindestens eine Seltenerde mit Kohlenmonoxid (CO),
(ii) die Carbonylierung des Produkts, erhalten durch Wärmebehandlung, und
(iii) vorzugsweise die Zugabe eines Trägers, und
(iv) eine thermische Behandlung mit einer Temperatur, die ausreichend ist, um Seltenerdoxide mindestens auf der Oberfläche der gebildeten Nanopartikel zu bilden.

10. Verfahren nach Anspruch 9, umfassend:
a. Mischen unter Rühren und unter inerter Atmosphäre eines Pt- Salzes, eines Seltenerdsalzes, eines Acetatsalzes und eines Lösemittels,
b. Erhitzen der zuvor erhaltenen Mischung unter einer Atmosphäre, die Kohlenmonoxid umfasst.
c. Ersetzen der Atmosphäre, die Kohlenmonoxid enthält, durch eine inerte Atmosphäre, z. B. Stickstoff, und vorzugsweise Zugeben eines Nanopartikelträgers,
d. Verdampfen des Lösemittels, um ein Nanopartikelpulver zu erhalten,
e. thermisches Behandeln des Nanopartikelpulvers bei einer Temperatur zwischen 80 °C und 600 °C unter einer Atmosphäre, die ein inertes Gas umfasst, in Anwesenheit eines Wasserstoffs,
f. Waschen des behandelten katalytischen Pulvers, um Nanopartikel zu erhalten.

11. Verfahren nach Anspruch 9 oder 10, wobei das Verfahren außerdem vor dem Schritt d die Einführung unter inerter Atmosphäre und bei Umgebungstemperatur eines Trägers in die Mischung, erhalten in Schritt c, umfasst.

12. Verfahren nach Anspruch 10 oder 11, wobei der Träger ein Kohlenstoffträger ist, vorzugsweise ein aktivierter Kohlenstoffträger.

13. Verfahren zum Herstellen von Nanopartikeln, umfassend:
(v) einen Schritt des In-Kontakt-Bringens mindestens eines Nanopartikelvorläufers, umfassend Platin mit einem Acetatsalz und Kohlenmonoxid (CO),
(vi) die Carbonylierung des Produkts, erhalten durch thermische Behandlung,
(vii) Zugeben eines Nanopartikelvorläufers, umfassend mindestens ein Koordinationspolymer (MOF) und mindestens eine Seltenerde und optional einen Träger,
und
(viii) eine thermische Behandlung mit einer Temperatur, die ausreichend ist, um Seltenerdoxide mindestens auf der Oberfläche der gebildeten Nanopartikel zu bilden.

14. Verfahren nach Anspruch 13, umfassend:
g. Mischen unter Rühren und unter inerter Atmosphäre eines Pt-Salzes, von Natriumacetat und eines Lösemittels,
h. Erhitzen der zuvor unter eine Atmosphäre, die Kohlenmonoxid enthält, erhaltenen Mischung,
i. Ersetzen der Atmosphäre, die Kohlenmonoxid enthält, durch eine inerte Atmosphäre,
j. Zugeben einer MOF-Verbindung, die mindestens eine Seltenerde und mindestens einen Liganden umfasst, ausgewählt aus 2-Aminoterephtalat, 1,3,5-Benzentricarboxylat, 5- Aminoisophtalat, 4,4'-Oxybis(benzoat), 1,2,4,5- oder 4,4'-Biphenyldicarboxylat und vorzugsweise Zugeben eines Kohlenstoffträgers, insbesondere Kohlenstoffnanoröhrchen,
k. Verdampfen des Lösemittels, um ein Nanopartikelpulver zu erhalten,
l. thermisches Behandeln des Nanopartikelpulvers bei einer Temperatur im Bereich zwischen 100 und 1000 °C, unter einer Atmosphäre eines inerten Gases,
m. Waschen des behandelten katalytischen Pulvers, um Nanopartikel zu erhalten.

15. Verfahren nach Anspruch 13 oder 14, wobei die Menge der MOF-Verbindung, eingeführt in Schritt j, im Bereich zwischen 10 und 20 Massen% liegt, vorzugsweise 10 Massen% mit Bezug auf die Kohlenstoffmasse, eingeführt in Schritt j mit der MOF-Verbindung.

16. Verfahren nach einem beliebigen der Ansprüche 13 bis 15, umfassend, außer dem Schritt j, Einführen, unter inerter Atmosphäre und bei Umgebungstemperatur eines Trägers in die Mischung, erhalten in Schritt i.

17. Verfahren nach einem beliebigen der Ansprüche 13 bis 16, wobei der Träger aus Kohlenstoffnanoröhrchen besteht, vorzugsweise Kohlenstoffnanoröhrchen mit zahlreichen Schichten, die insbesondere oxidiert sein können.

18. Tinte, umfassend Nanopartikel nach einem beliebigen der Ansprüche 1 bis 8, oder die durch das Verfahren nach einem beliebigen der Ansprüche 9 bis 12 und/oder das Verfahren nach einem beliebigen der Ansprüche 13 bis 17 erhalten werden können.

19. Wasserstoffbrennstoffzellen-Kathode, umfassend Nanopartikel nach einem beliebigen der Ansprüche 1 bis 8, oder die durch das Verfahren nach einem beliebigen der Ansprüche 9 bis 12 und/oder das Verfahren nach einem beliebigen der Ansprüche 13 bis 17 erhalten werden können.

20. Kathode nach Anspruch 19, wobei die Nanopartikel auf der Oberfläche der Kathode mit Hilfe einer Tinte nach Anspruch 18 abgelegt sind.

21. Verwendung der Nanopartikel nach einem beliebigen der Ansprüche 1 bis 5, oder die durch das Verfahren nach einem beliebigen der Ansprüche 9 bis 12 und/oder das Verfahren nach einem beliebigen der Ansprüche 13 bis 17 oder eine Tinte nach Anspruch 18 erhalten werden können, als Katalysator für die Reduktionsreaktion des Disauerstoffs (RRO) in saurem Medium.

## Claims

1. Nanoparticles comprising at least one platinum compound comprising at least platinum and at least one rare earth, said rare earth being present in oxidised form on the surface of the platinum.

2. Nanoparticles according to claim 1, wherein the platinum compound has the following formula (I):
Pt-MₓO_{y}
where x is the number of rare earth M atoms present and y is the number of oxygen atoms present.

3. Nanoparticles according to claim 1 or 2, for which the catalyst nanoparticles are supported.

4. Nanoparticles according to claim 1 or 2, for which the rare earth element is Yttrium, Gadolinium, Samarium, Cerium, Europium, Praseodymium, Scandium, Terbium, Ytterbium, Thulium or any of the mixtures thereof.

5. Nanoparticles according to any of claims 1 to 4, for which the rare earth element is yttrium or gadolinium.

6. Nanoparticles according to any of claims 1 to 4, for which the specific activity of said nanoparticles is greater than or equal to 120 µA.cm⁻²_{Pt}.

7. Nanoparticles according to any of claims 1 to 4, for which the mass activity of said nanoparticles is greater than or equal to 80 mA.mg⁻¹_{Pt}.

8. Nanoparticles as claimed in any preceding claim, for which the average size of the nanoparticles is between 0.1 and 10 nm, for example between 0.5 and 5 nm, more specifically between 2 and 3 nm.

9. Method for preparing nanoparticles comprising a step of heat treatment comprising:
(i) a step of putting precursors of nanoparticles, comprising platinum and at least one rare earth, in contact with carbon monoxide (CO),
(ii) the carbonylation of the product obtained by heat treatment and,
(iii) preferably the adding of a support, and
(iv) a heat treatment at a temperature that is sufficient to form rare earth oxides at least on the surface of the nanoparticles formed.

10. Method according to claim 9 comprising:
a. The mixing under agitation and in an inert atmosphere of a Pt salt, of a rare earth salt, of an acetate salt, and of a solvent,
b. The heating of the mixture obtained beforehand in an atmosphere comprising carbon monoxide.
c. The replacing of the atmosphere containing carbon monoxide with an inert atmosphere, for example nitrogen, and preferably the adding of a support of nanoparticles,
d. The evaporating of the solvent in order to obtain a powder of nanoparticles,
e. The heat treatment of the powder of nanoparticles at a temperature between 80°C and 600°C in an atmosphere comprising an inert gas, in the presence of dihydrogen,
f. The washing of the treated catalytic powder in order to obtain nanoparticles.

11. Method according to claim 9 or 10, for which the method further comprises before the step d, the introducing in an inert atmosphere and at ambient temperature of a support into the mixture obtained in the step c.

12. Method according to claim 10 or 11, for which the support is a carbon support, more preferably an activated carbon support.

13. Method for preparing nanoparticles comprising:
(v) a step of putting at least one precursor of nanoparticles comprising platinum in contact with an acetate salt and carbon monoxide (CO),
(vi) the carbonylation of the product obtained by heat treatment,
(vii) the adding of a precursor of nanoparticles comprising at least one coordination polymer (MOF) and at least one rare earth, and optionally a support,
and
(viii) a heat treatment at a temperature that is sufficient to form rare earth oxides at least on the surface of the nanoparticles formed.

14. Method according to claim 13 comprising:
g. the mixing under agitation and in an inert atmosphere of a Pt salt, sodium acetate and a solvent,
h. the heating of the mixture obtained beforehand in an atmosphere containing carbon monoxide,
i. the replacing of the atmosphere containing carbon monoxide with an inert atmosphere,
j. the adding of an MOF compound comprising at least one rare earth and at least one ligand chosen from 2-aminoterephtalate, 1,3,5-benzenetricarboxylate, 5-aminoisophtalate, 4,4'-oxybis(benzoate), 1,2,4,5-benzenetetracarboxylate, or 4,4'- biphenyldicarboxylate and preferably the adding of a carbon support, in particular carbon nanotubes,
k. the evaporating of the solvent in order to obtain a powder of nanoparticles,
I. the heat treatment of the powder of nanoparticles at a temperature between 100 and 1000 °C in an atmosphere of an inert gas,
m. the washing of the treated catalytic powder in order to obtain nanoparticles.

15. Method according to claim 13 or 14, for which the quantity of the MOF compound introduced in the step j. is between 10 and 20% by weight, more preferably 10% by weight in relation to the weight of the carbon introduced in the step j. with the MOF compound.

16. Method according to any of claims 13 to 15, further comprising in the step j, the introduction in an inert atmosphere and at ambient temperature of a support into the mixture obtained in the step i.

17. Method according to any of claims 13 to 16, for which the support is comprised of carbon nanotubes, more preferably multilayer carbon nanotubes that in particular can be oxidised.

18. Ink comprising nanoparticles according to any of claims 1 to 8 or able to be obtained by the method according to any of claims 9 to 12 and/or the method according to any of claims 13 to 17.

19. Hydrogen fuel cell cathode comprising nanoparticles according to any of claims 1 to 8 or able to be obtained by the method according to any of claims 9 to 12 and/or the method according to any of claims 13 to 17.

20. Cathode according to claim 19, for which the nanoparticles are deposited onto the surface of the cathode by means of an ink according to claim 18.

21. Use of nanoparticles according to any of claims 1 to 5, or able to be obtained by the method according to any of claims 9 to 12 and/or the method according to any of claims 13 to 17, or of an ink according to claim 18, as a catalyst for the oxygen reduction reaction (ORR) in an acid medium.
